(19) Europäisches Patentamt / European Patent Office / Office européen des brevets

(11) **EP 4 664 156 B1**

(12) **EUROPEAN PATENT SPECIFICATION**

(45) Date of publication and mention
of the grant of the patent:
**20.05.2026 Bulletin 2026/21**

(21) Application number: **24181154.6**

(22) Date of filing: **10.06.2024**

(51) International Patent Classification (IPC):
*G01S 13/56* (2006.01)     *G01S 7/41* (2006.01)
*G01S 13/58* (2006.01)     *G01S 13/66* (2006.01)

(52) Cooperative Patent Classification (CPC):
**G01S 13/584; G01S 7/415; G01S 13/56;
G01S 13/66**

(54) **METHOD AND DEVICE FOR IDENTIFYING SWAYING OBJECTS IN RADAR DATA**

VERFAHREN UND VORRICHTUNG ZUR IDENTIFIZIERUNG VON SCHWANKENDEN OBJEKTEN IN RADARDATEN

PROCÉDÉ ET DISPOSITIF D'IDENTIFICATION D'OBJETS DE BALANCEMENT DANS DES DONNÉES RADAR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**17.12.2025 Bulletin 2025/51**

(73) Proprietor: **Axis AB
223 69 Lund (SE)**

(72) Inventors:
• **Nilsson, Joel
223 69 LUND (SE)**
• **Nadig, Santhosh
223 69 LUND (SE)**

(74) Representative: **AWA Sweden AB
Matrosgatan 1
Box 5117
200 71 Malmö (SE)**

(56) References cited:
**CN-A- 115 113 208     US-A- 3 967 283
US-A1- 2022 026 557**

• **ZHANG JIA ET AL: "mmHawkeye: Passive UAV
Detection with a COTS mmWave Radar", 2023
20TH ANNUAL IEEE INTERNATIONAL
CONFERENCE ON SENSING, COMMUNICATION,
AND NETWORKING (SECON), IEEE, 11
September 2023 (2023-09-11), pages 267 - 275,
XP034453704, DOI: 10.1109/
SECON58729.2023.10287526**

# Description

## Technical field

The present invention relates to identifying swaying objects in radar data, and specifically to determining that there are one or more swaying objects for a range interval of a plurality of range intervals based on a plurality of range-Doppler maps provided by a radar system.

## Background

When surveilling a scene by means of a surveillance system using radar it may be desired to detect and/or present only moving objects in the scene. However, a problem in prior art is that differentiation is not made between moving objects such as cars or people and objects such as grass, trees, and poles which are swaying due to wind, which are typically not of interest. Hence, it is desired to be able to identify such swaying objects, for example such that the swaying objects are not identified as detections or such that any detections relating to the swaying objects are not processed further such as by a tracking algorithm or a classifier.

CN 115 113 208 A describes a continuous wave radar clutter cancellation method based on clutter feature accurate cognition, which can be used for solving the clutter suppression problem of a continuous wave radar in complex terrains such as cities or suburbs and complex meteorological detection environments such as clouds and rains.

US 3 9767 283 A describes an intrusion detector operating with electromagnetic sensors to detect intruder motion within large, defined areas.

ZHANG JIA ET AL: "mmHawkeye: Passive UAV Detection with a COTS mmWave Radar" 2023 20TH ANNUAL IEEE INTERNATIONAL CONFERENCE ON SENSING, COMMUNICATION, AND NETWORKING (SECON), IEEE, 11 September 2023, pages 267-275, describes a passive approach for UAV detection with a COTS millimeter wave (mmWave) radar that does not require prior knowledge of the type, motions, and flight trajectory of the UAV, while exploiting the signal feature induced by the UAV's periodic micro-motion (PMM) for long-range accurate detection.

US 2022/026557 A1 describes a system that learns a radar scene's background and that filters radar tracks determined to be in the radar scene background.

## Summary of the invention

An object of the present invention is to overcome or at least mitigate the problems and drawbacks of prior art.

According to a first aspect a method is provided for determining that there are one or more swaying objects for a range interval of a plurality of range intervals based on a plurality of range-Doppler maps provided by a radar system. Each range-Doppler map of the plurality of range-Doppler maps corresponds to a time interval of a sequence of time intervals and comprises a respective energy value for a plurality of velocity intervals for each range interval of the plurality of range intervals. The method comprises, for each time interval of the sequence of time intervals, calculating from the range-Doppler map corresponding to the time interval a difference between a statistical measure of energy values for a set of velocity intervals with positive velocities of the plurality of velocity intervals for the range interval and the statistical measure of energy values for a set of velocity intervals with negative velocities of the plurality of velocity intervals for the range interval, thereby calculating a sequence of differences for the sequence of time intervals. The method further comprises determining a frequency spectrum of the calculated sequence of differences for the sequence of time intervals, and on condition that there is a peak in the frequency spectrum for a frequency above a frequency threshold, determining that there are one or more swaying objects at the range interval.

Swaying objects will typically have a periodic movement such that their movement will vary between positive and negative velocities. Hence, the energy values in the plurality of range-Doppler maps will typically vary such that the energy values are higher for positive velocities periodically and higher for negative velocities periodically in range intervals in which there are swaying objects. Hence, the difference of the statistical measure for energy values of positive and negative velocities for the plurality of range-Doppler maps will typically also vary periodically. The difference of the statistical measure will vary with the same frequency as the swaying objects are swaying at. Hence, by calculating the sequence of differences of the statistical measures for energy values of positive and negative velocities for the sequence of time intervals and then determining a frequency spectrum for the calculated sequence of differences, swaying objects at a specific frequency may be identified as a peak in the frequency spectrum at that specific frequency.

Identifying that there are one or more swaying objects in a range interval enables avoiding detections in relation to the one or more swaying objects from being further processed such as by a tracking algorithm or a classifier. Furthermore, presentation of tracks relating to one or more swaying objects can be avoided.

By statistical measure is meant a numerical value that summarizes a characteristic of a data set.

By frequency spectrum is meant a representation of a signal, in this case the calculated sequence of differences, in the frequency domain. In particular, it may refer to the magnitude spectrum which describes the distribution of the magnitudes of the frequency components in the signal.

In embodiments the method according to the first aspect further comprises filtering out any detections in velocity intervals of the plurality of velocity intervals with absolute velocity less than a first velocity threshold for the range interval on condition that it is determined that there are one or more swaying objects at the range interval.

By filtering out detections in the range interval on condition that it is determined that there are one or more swaying object at the range interval, detections relating to the one or more swaying objects which are typically not relevant to a user of the radar system, e.g. an operator of a surveillance system including the radar system, are not used in a subsequent processing or visualization of detections. Furthermore, by only filtering out any detections in velocity intervals of the plurality of velocity intervals with absolute velocity less than a first velocity threshold for the range interval, any detections having an absolute velocity greater than or equal to the velocity threshold are not filtered out. Such detections may for example relate to other moving objects than the one or more swaying objects.

By detection here is typically meant that an energy value in a velocity interval at a range interval is considered to relate to an object. For example, this may be determined based on an energy value being over an energy threshold which generally means herein that the energy values are considered high enough to relate to an object. For example, the energy threshold may be based on a level of noise and the energy values being over an energy threshold could then mean that a signal to noise ratio of the energy value being over an SNR threshold. The energy threshold (SNR threshold) may be different for different velocity intervals and the energy threshold (SNR threshold) of one velocity interval may depend on the energy values of other velocity intervals. The energy threshold (SNR threshold) may be selected to provide probability of detection of a moving object is higher than a desired detection probability and a probability that false detections is lower than a desired false detection probability.

In embodiments the method according to the first aspect further comprises filtering out energy values of velocity intervals of the plurality of velocity intervals with absolute velocity less than a first velocity threshold for the range interval on condition that it is determined that there is a swaying object at the range interval and that there is no peak in the frequency spectrum for a frequency below the frequency threshold.

By the condition that there is no peak in the frequency spectrum for a frequency below the frequency threshold for detections to be filtered out, filtering out detections relating to other objects than the one or more swaying objects may be prevented. For example, such other objects may be objects that are moving at a low radial velocity in relation to the radar. The frequency threshold may for example be set based on a lowest expected frequency for the swaying of the one or more swaying objects.

The first velocity threshold may be fixed. The velocity threshold may for example be set based on a maximum expected velocity of the one or more swaying objects. Detections relating to an absolute velocity higher than the first velocity threshold would then be considered to relate to moving objects that are not swaying.

In embodiments, the method according to the first aspect further comprises, for each velocity interval at the range interval, aggregating energy values of at least a subset of the plurality of range-Doppler maps based on an aggregation function, thereby deriving an aggregated energy value for each velocity interval at the range interval. A maximum absolute velocity is then identified for which there among the plurality of velocity intervals for the range interval are a velocity interval with positive velocity and a velocity interval with negative velocity that have the maximum absolute velocity and an aggregated energy value over an aggregated energy threshold. The first velocity threshold is then set based on the maximum absolute velocity.

By identifying the maximum absolute velocity for which there are both a velocity interval with negative velocity and a velocity interval with positive velocity that has an aggregated energy value over the aggregated energy threshold, this is considered to relate to the one or more swaying objects and the maximum absolute velocity may be used as an estimation of the maximum absolute velocity of the one or more swaying objects.

In embodiments, the method according to the first aspect further comprises dividing the velocity intervals of the plurality of velocity intervals for the range interval of each range-Doppler map of the plurality of range-Doppler maps into a plurality of groups depending on their absolute velocities. The groups are ordered such that velocity intervals in a group of higher order have larger absolute velocities than velocity intervals in a group of lower order. The plurality of groups are then processed in order by, for a currently processed group: for each time interval of the sequence of time intervals, calculating from the range-Doppler map corresponding to the time interval a difference between the statistical measure of energy values for velocity intervals with positive velocities in the group of velocity intervals for the range interval and the statistical measure of energy values for velocity intervals with negative velocities in the group of velocity intervals for the range interval, thereby calculating a sequence of differences for the sequence of time intervals. A frequency spectrum of the calculated sequence of differences for the sequence of time intervals is then calculated. On condition that there is a peak in the frequency spectrum for a frequency above the frequency threshold, the next group in the order is processed. On condition that there is no peak in the frequency spectrum for a frequency above the frequency threshold, the first velocity threshold is set to a value corresponding to the maximum absolute velocity of the velocity intervals in the previous group in the order.

By identifying the group with the highest absolute velocity for which it is determined that there is a peak in the frequency spectrum for a frequency above the frequency threshold, this group is considered to relate to the highest group relating to the one or more swaying objects and the highest absolute velocity of that group may be used as an estimation of the maximum absolute velocity of the one or more swaying objects.

In embodiments, in the act of calculating a difference, the difference is calculated between the statistical measure of energy values of a set of velocity intervals with positive velocities with absolute velocity less than a second velocity threshold for the range interval and the statistical measure of energy values of a set of velocity intervals with negative velocities with absolute velocity less than the second velocity threshold for the range interval.

By calculating the difference only based on energy values of the set of velocity intervals with absolute velocity less than the second velocity threshold, the computational load is reduced.

The statistical measure may be one of standard deviation, variance, mean, median, and sum of squares.

According to a second aspect, a non-transitory computer-readable storage medium is provided having stored thereon instructions which, when executed in a device having a processing capability, causes the device to perform the method according to the first aspect.

The above-mentioned optional additional features of the method according to the first aspect, when applicable, apply to the non-transitory computer-readable storage medium according to the second aspect as well. In order to avoid repetition, reference is made to the above.

According to a third aspect, a device for determining that there are one or more swaying objects for a range interval of a plurality of range intervals based on a plurality of range-Doppler maps provided by a radar system is provided. Each range-Doppler map of the plurality of range-Doppler maps corresponds to a time interval of a sequence of time intervals and comprises a respective energy value for a plurality of velocity intervals for each range interval of the plurality of range intervals. The device comprises circuitry configured to execute a calculating function, a first determining function, and a second determining function. The calculating function is configured to, for each time interval of the sequence of time intervals, calculating from the range-Doppler map corresponding to the time interval a difference between a statistical measure of energy values of a set of velocity intervals with positive velocities of the plurality of velocity intervals for the range interval and the statistical measure of the energy values of a set of velocity intervals for negative velocities of the plurality of velocity intervals for the range interval. The first determining function is configured to determine a frequency spectrum of the calculated sequence of differences. The second determining function is configured to, on condition that there is a peak in the frequency spectrum for a frequency above a frequency threshold, determine that there are one or more swaying objects at the range interval.

The above-mentioned optional additional features of the method according to the first aspect, when applicable, apply to the device according to the third aspect as well. In order to avoid repetition, reference is made to the above.

Hence, it is to be understood that this invention is not limited to the particular component parts of the system described or acts of the methods described as such system and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Brief description of the drawings

The above and other aspects of the present invention will now be described in more detail, with reference to appended figures. The figures should not be considered limiting but are instead used for explaining and understanding.

Figures 1a and 1b show flow charts in relation to embodiments of a method for determining that there are one or more swaying objects for a range interval of a plurality of range intervals based on a plurality of range-Doppler maps provided by a radar system.

Figure 2 shows an example of a range-Doppler map.

Figures 3a and 3b show a diagram of differences between the standard deviation of energy values for positive velocity intervals and the standard deviation of energy values for negative velocity intervals for a set of frames relating to time intervals, and a diagram of a Discrete Fourier Transform of the differences, respectively.

Figure 4 shows a schematic diagram in relation to embodiments of a device for determining that there are one or more swaying objects for a range interval of a plurality of range intervals based on a plurality of range-Doppler maps provided by a radar system.

Detailed description

The present invention will now be described with reference to the accompanying drawings, in which currently preferred embodiments of the invention are illustrated. This invention may, however, be embodied in many different forms and should not be construed as limited to the embodiments set forth herein.

Embodiments of the present invention are applicable in scenarios wherein a radar system is used for surveilling an area, e.g. in order to identify moving objects based on range-Doppler maps for a sequence of time intervals. Some of the moving objects may be swaying objects, such as grass, trees, poles etc. that sway due to wind, and such swaying objects are typically of less interest for surveillance purposes and hence it is of interest to identify such swaying objects and related radar data. Identified swaying objects and related radar data may be used to enable refraining from visualizing such swaying objects to a user in order to avoid distraction of the user by such swaying objects when they are of lower or no interest. Additionally or alternatively, such radar data may be excluded from further processing in the surveillance system in order to reduce the amount of computation in the surveillance system.

A swaying object is an object that moves from side to side and/or back and forth in relation to a radar.

The radar system is of a type that enables determining of a velocity of an object detected by the radar device. For example, the radar of the radar system may be a frequency modulated continuous wave (FMCW) radar that uses short transmit signals (chirps) for which the frequency varies over time, typically the frequency is ramped up or ramped down. As another example the radar may be a phase modulated continuous wave (PMCW) radar device.

The radar system is further of a type that enables determining a direction vector from the radar device to an object detected by the radar of the radar system. For example, the radar may be a multiple-input multiple output (MIMO) radar device.

A range-Doppler map for a time interval is a two-dimensional matrix of radar data in the form of energy values for reflections from objects located at different range (radial distance) along a first axis (dimension), e.g. y-axis, and having different radial velocities along a second axis (dimension), e.g. x-axis. More specifically, for each of a sequence of consecutive range intervals, e.g. starting at 0 and up to a maximum range, along the first axis, an energy value is provided for each of a sequence of consecutive velocity intervals, e.g. starting at a maximum negative velocity up to a maximum positive velocity. For example, the maximum negative velocity and the maximum positive velocity have the same absolute velocity. In relation to range-Doppler maps, velocity intervals for a range interval may be denoted as 'bins' and zero velocity may be denoted 'DC Doppler'. A range interval is an interval from a lower range to a upper range. Similarly, a velocity interval is an interval from a lower velocity to a upper velocity. Hence, an energy value for a velocity interval at a range interval relates to all velocities from the lower velocity to the upper velocity of the velocity interval for all ranges from the lower range to the upper range of the range interval.

Furthermore, an energy value is a signal value in the range-Doppler map. Hence, an energy value for a velocity interval at a range interval relates to detected signal value for all velocities in the velocity interval at all ranges in the range interval.

As the swaying objects are identified based on range-Doppler maps, only swaying objects that have a component of the swaying in a radial direction in relation to the radar will be identified. On the other hand, swaying objects without any radial component of the swaying movement are seen as static objects in the range-Doppler maps and thus, will not result in any detections. For example, for an FMWC radar each time interval may correspond to a radar frame and may typically be 10 ms.

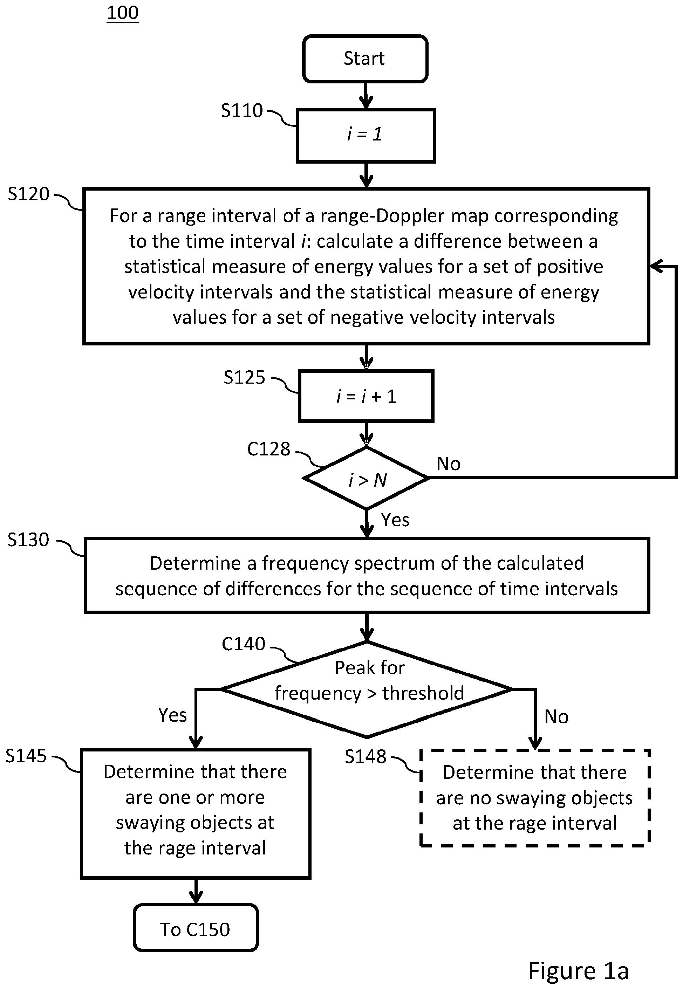

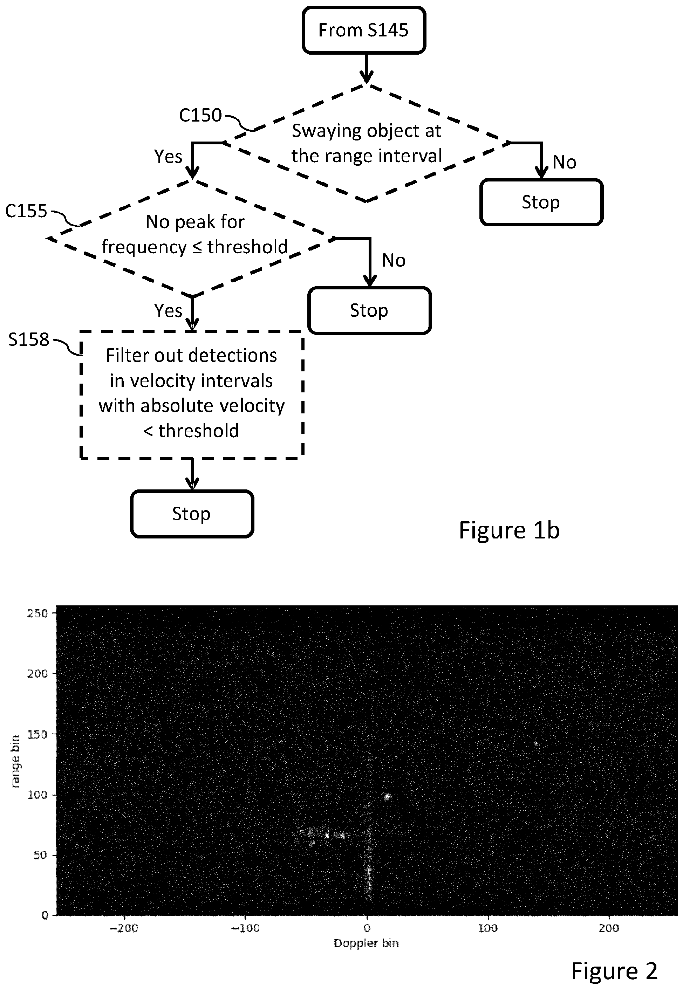

Embodiments of a method 100 for determining that there are one or more swaying objects for a range interval of a plurality of range intervals based on a plurality of range-Doppler maps provided by a radar system will now be described in relation to the flow chart in Figures 1a and 1b. Each range-Doppler map of the plurality of range-Doppler maps corresponds to a time interval i of a sequence of time intervals. For example, the sequence of time intervals may be a sequence of N time intervals preceding a current time, where $N$ is selected to be sufficiently high in order to enable identifying swaying objects in case they exist. The time intervals should preferably be of the same length. Furthermore, the time intervals may be such that the start of each time interval follows directly on the end of a previous time interval in the sequence of time intervals. In alternative, the start of each time interval may follow after an intermediate time from the end of a previous time interval in the sequence of time intervals. In the latter case, the intermediate time between time intervals in the sequence should be of equal lengths.

Each range-Doppler map comprises a respective energy value for a plurality of velocity intervals for each range interval of the plurality of range intervals. The velocity intervals for each range interval may for example be consecutive velocity intervals from a negative velocity having a maximum absolute velocity to a positive velocity having the maximum absolute velocity. Figure 2 shows an example of a range-Doppler map with velocity intervals (Doppler bins) along a horizontal axis and range intervals (range bins) along a vertical axis. Energy values are indicated for the velocity intervals at each range interval such that a higher energy value is indicated by a brighter white in the velocity interval. The brighter indicated velocity intervals at zero velocity represent objects without radial velocity in relation to the radar. Brighter velocity intervals to the left of zero velocity represent objects with negative radial velocity in relation to the radar and brighter velocity intervals to the right of zero velocity represent objects with positive radial velocity in relation to the radar.

The method 100 is performed in relation to a range interval to determine whether there are one or more swaying objects in the range interval. In order to determine whether there are one or more swaying objects in other range intervals, the method 100 is repeated for those range intervals. In the following, velocity intervals with positive velocities will be denoted positive velocity intervals and velocity intervals with negative velocities will be denoted negative velocity intervals.

The method 100 comprises calculating S120 a sequence of differences for the sequence of time intervals ($i$ = 1 to $N$). Starting from the first time interval ($i$ = 1) S110, the difference is calculated S120 based on a range-Doppler map corresponding to the first time interval ($i$ = 1). The difference calculated is between a statistical measure of energy values for a set of positive velocity intervals for the range interval and the statistical measure of energy values for a set of negative velocity intervals for the range interval.

The statistical measure calculated may for example be the standard deviation, variance, mean, median, or sum of squares. Preferably a second order or higher statistic measure is used.

In calculating the difference S120 for each time interval i, the set of positive velocity intervals may be all positive velocity intervals and the set of negative velocity intervals may be all negative velocity intervals. However, to reduce the computation needed, the set of positive velocity intervals may be only a subset of all positive velocity intervals and the set of negative velocity intervals may be only a subset of the negative velocity intervals. For example, the subset of all positive velocity intervals may be all or a subset of the positive velocity intervals with absolute velocity less than a second velocity threshold and the subset of all negative velocity intervals may be all or a subset of the negative velocity intervals with absolute velocity less than the second velocity threshold. The second velocity threshold may be selected based on the maximum absolute velocity expected for swaying objects. If the swaying objects are expected to always have an absolute velocity lower than a maximum absolute velocity, the second velocity threshold may be set to that maximum absolute velocity since the swaying objects will not be expected to contribute to energy values for positive velocity intervals and negative velocity interval with absolute velocity greater than the expected maximum absolute velocity. The second velocity threshold may also be set to a value lower than the maximum absolute velocity expected for swaying objects since this will include at least some of the velocity intervals for which swaying objects will contribute to the energy values for at least some of the range-Doppler maps. The set of positive intervals may also be a subset of the positive velocity intervals such as every second or third positive velocity interval or other selection, and the set of negative velocity intervals may also be a subset of the negative velocity intervals such as every second or third negative velocity interval or other selection.

The calculation S120 of the difference is repeated for each next time interval ($i$ = $i$ + 1) S125, as long as the condition C128 that the number of the next time interval is not higher than the total number of time intervals ($i$ > $N$). On condition C128 that the next time interval is higher than the total number of time intervals ($i$ > $N$), the sequence of differences for the sequence of time intervals ($i$ = 1 to N) has been calculated.

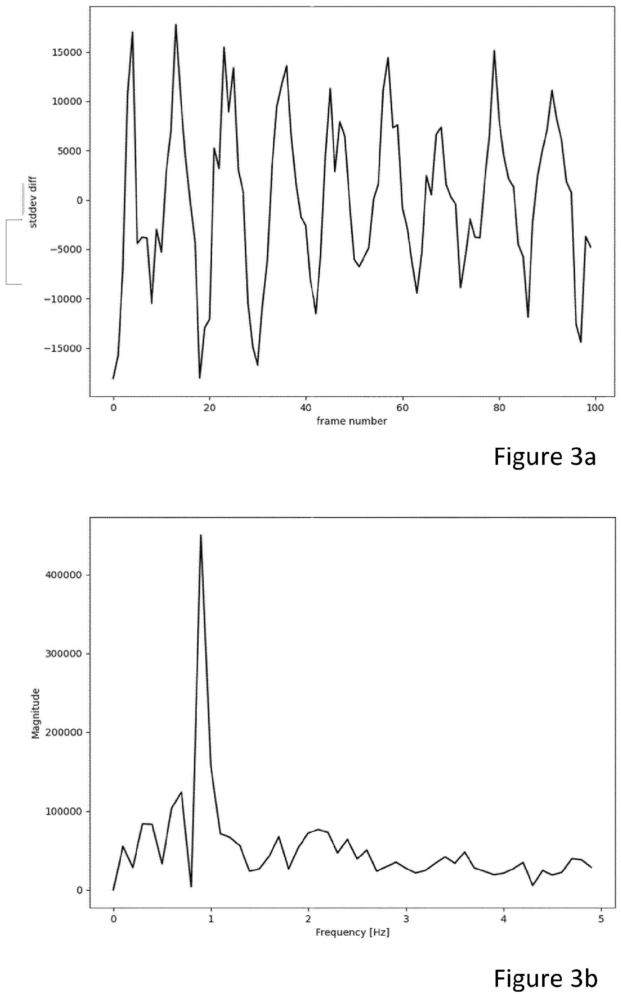

Turning to Figure 3a, a sequence of differences is shown for the standard deviation of energy values for a set of positive velocity intervals for a range interval and the statistical measure of energy values for a set of negative velocity intervals for the range interval for a plurality of range-Doppler maps each having a respective frame number and relating to a respective one of a sequence of time intervals. As can be seen in the diagram, the difference for the standard deviation alternates between positive and negative values. This indicates that there is movement in the range interval that alternates between positive and negative radial direction in relation to the radar. Such movement that alternates between positive and negative radial direction in relation to the radar would for example be a swaying movement of an object at the range interval.

Turning back to Figure 1a, the method 100 then continues to determining S130 a frequency spectrum of the calculated sequence of differences for the sequence of time intervals. In such a frequency spectrum, a magnitude is given for each frequency based on the sequence of differences calculated for the sequence of time intervals. A peak in magnitude relating to the difference at a frequency in such a diagram indicates an oscillation of the difference at that frequency. The magnitude may also be referred to as amplitude.

The frequency spectrum may be calculated by transformation into the frequency domain, e.g. by performing a Fast Fourier Transform (FFT) of the sequence of differences. For example, a frequency spectrum calculated by means of an FFT may be plotted in a diagram with frequencies along a first axis, e.g. x-axis, and magnitudes of the transformed values along a second axis, e.g. y axis. A peak in the magnitude at a frequency in such a diagram indicates an oscillation of the difference at that frequency.

On condition C140 that there is a peak in the frequency spectrum for a frequency above a frequency threshold, it is determined S145 that there are one or more swaying objects at the range interval.

A peak is present at a frequency in the frequency spectrum if a magnitude at the frequency in relation to a noise level of the frequency spectrum is above a threshold. That is, if the Signal to Noise Ratio (SNR) at the frequency is above a threshold. The noise level in the frequency spectrum may be determined based on the magnitude for each frequency. For example, the noise level may be determined as the median of the magnitudes for all frequencies. In embodiments where the frequency spectrum is calculated by means of FFT the magnitude for each frequency is the transformed value for the magnitude for that frequency.

Turning to Figure 3b, a diagram of an FFT of the differences of the diagram of Figure 2a is shown. In the diagram a peak at approximately 1 Hz is shown corresponding to one or more swaying objects.

Turning back to Figure 1a, on condition C140 that there is no peak in the frequency spectrum for a frequency above a frequency threshold, it is determined S148 that there are no swaying objects at the range interval.

Once it has been determined S145 that there are one or more swaying objects in the range interval, further processing of the energy values for the velocity intervals at the range interval may be modified, e.g. to reduce amount of computation and/or to reduce clutter in a visualization in the surveillance system. For example, energy values that are identified or assumed to relate to the one or more swaying objects may be identified and optionally filtered out, i.e. removed, from further processing, e.g. such that it is not used for detection of objects, visualization in the surveillance system, tracking of objects, identification of type of object, etc.

For example, turning to Figure 1b, on condition C150 that there are one or more swaying objects at the range interval, any detections in velocity intervals of the plurality of velocity intervals with absolute velocity less than a first velocity threshold may be filtered out S158 for the range interval.

By detection here is typically meant that an energy value in a velocity interval at a range interval is considered to relate to an object. For example, this may be determined based on an energy value being over an energy threshold which generally means herein that the energy values are considered high enough to relate to an object. For example, the energy threshold may be based on a level of noise and the energy values being over an energy threshold could then mean that a signal to noise ratio of the energy value being over an SNR threshold. The energy threshold (SNR threshold) may be different for different velocity intervals and the energy threshold (SNR threshold) of one velocity interval may depend on the energy values of other velocity intervals. The energy threshold (SNR threshold) may be selected such that a probability that a moving object will result in a detection is higher than a desired detection probability and such that a probability of false detections is lower than a desired false detection probability. Identification of detections is typically performed for all velocity intervals for the range interval such that any further processing and any visualization to a user in the surveillance system is based on detections.

The first velocity threshold may be a fixed threshold. The fixed first velocity threshold may be set based on a maximum velocity swaying objects are expected to move at when swaying. More specifically, the fixed first velocity threshold may be set without taking into account the specific range-Doppler maps based on which it is determined that there are one or more swaying objects in the range interval. For example, the fixed first velocity may be set to the maximum velocity swaying objects are expected to move at when swaying. The fixed first velocity threshold may be set to a value such that it is equal to a maximum velocity swaying objects of all types are expected to move at when swaying. In alternative a respective maximum velocity swaying objects are expected to move at when swaying may be determined for each type of swaying object. The fixed first velocity threshold may then be set to a value such that it is equal to the highest of the maximum velocities for the types of swaying objects present in the area to be surveilled.

In addition to the condition C150 that it is determined that there is a swaying object at the range interval, a further condition C155 that there is no peak in the frequency spectrum for a frequency below the frequency threshold may be required to be fulfilled in order to perform the step of filtering out S158 energy values of velocity intervals of the plurality of velocity intervals with absolute velocity less than the first velocity threshold for the range interval. This further condition is included as a peak in the frequency spectrum for a frequency below the frequency threshold indicates that there is at least one moving object that is not a swaying object in the range interval. Hence, filtering out detections in the range interval may risk filtering out also such detections relating to the at least one moving objects at the range interval that is not a swaying object which may be undesirable. Consequently, filtering is only performed when further condition C155 that there is no peak in the frequency spectrum for a frequency below the frequency threshold is also fulfilled.

Filtering out detections within a number of velocity intervals (denoted guard bins) from DC Doppler may be done for all range intervals in order to remove detections relating to static objects. In case it is determined that there is one or more swaying objects for a range interval, detection within a larger number of velocity intervals, namely all velocity intervals with absolute velocity less than the first velocity threshold, would typically be filtered out than for range intervals for which it is not determined that there is one or more swaying objects. Hence, filtering out S158 any detections in velocity intervals of the plurality of velocity intervals with absolute velocity less than a first velocity threshold for the range interval may also be seen as increasing the number of guard bins around DC Doppler for that range interval.

The first velocity threshold may further be set taking into account the specific range-Doppler maps based on which it is determined that there are one or more swaying objects in the range interval.

In one embodiment, when it is determined that there are one or more swaying objects at a range interval, at least a subset of the plurality of range-Doppler maps are used to determine the first velocity threshold for the range interval. An aggregation of energy values is then performed over the at least a subset of the plurality of range-Doppler maps. Specifically, for each velocity interval at the range interval, energy values of the at least a subset of the plurality of range-Doppler maps are aggregated based on an aggregation function. This results in deriving of an aggregated energy value for each velocity interval at the range interval. The aggregation function may for example be a mean, a number of times the energy value is above an energy threshold, etc. The aggregated energy values of the velocity intervals at the range interval are then reviewed to identify a maximum absolute velocity for which there is at least one positive velocity interval that has the maximum absolute velocity and an aggregated energy value over an aggregated energy threshold, and at least one negative velocity interval that has the maximum absolute velocity and an aggregated energy value over the aggregated energy threshold. If the aggregation function is a mean function, the aggregated energy value of a velocity interval is the mean energy value of the velocity interval over the at least a subset of the plurality of range-Doppler maps. The aggregated energy value being over the aggregated energy threshold for a velocity interval may then mean that the signal to noise ratio of the mean value of the energy value of the velocity interval over the at least a subset of the plurality of range-Doppler maps is over an SNR threshold. If the aggregation function is a counter of the number of range-Doppler maps of the at least a subset of range-Doppler maps for which the energy value of a velocity interval is over an energy threshold, the aggregated energy value of a velocity interval is the value of the counter of the velocity interval. The energy value of a velocity interval being over an energy threshold for a velocity interval may then mean that the signal to noise ratio of the energy value of the velocity interval being over an SNR threshold. The aggregated energy value being over the aggregated energy threshold for a velocity interval may then mean that the counter of the velocity interval being over a counter threshold. This may for example be achieved by reviewing the aggregated energy values of positive velocity intervals to identify the positive velocity intervals that have an aggregated energy value over the aggregated energy threshold and reviewing the aggregated energy values of negative velocity intervals to identify the negative velocity intervals that have an aggregated energy value over the aggregated energy threshold. The maximum absolute velocity is then identified for which there is both a positive velocity interval that has an aggregated energy value over the aggregated energy threshold and a negative velocity interval that has an aggregated energy value over the aggregated energy threshold. The first velocity threshold may then be set based on the maximum absolute velocity, e.g. to the maximum absolute velocity. This embodiment is based on an assumption that one or more swaying objects will have a maximum positive velocity and a maximum negative velocity during swaying that have the same or similar absolute velocity. The at least a subset of the plurality of range-Doppler maps are selected based on the lowest frequency at which an object is expected to sway. For example, if the number of range-Doppler maps per second is 10 and the first velocity threshold should be possible to determine for objects swaying at 1 Hz, then the subset of the plurality of range-Doppler maps should cover a time range of at least one second, i.e. one period of the swaying. For example, 10 consecutive range-Doppler may be selected for the subset. Depending on the number of range-Doppler maps per second and the lowest frequency for which the first velocity threshold should be possible to determine, not all of the consecutive range-Doppler maps are required. Instead, a subset may be used, such as every second range-Doppler map, every third or other subset. By selecting the subset of the plurality of range-Doppler maps based on the lowest frequency at which an object is expected to sway, it can be assured that range-Doppler maps covering at least one period of the lowest frequency such that a swaying object swaying at the lowest frequency will have its highest positive velocity and highest negative velocity in the subset of the plurality of range-Doppler maps. The time covered and the number of range-Doppler maps selected may further depend on the aggregation function used.

In another embodiment, when it is determined that there are one or more swaying objects at a range interval, the velocity intervals of the plurality of velocity intervals for the range interval of each range-Doppler map of the plurality of range-Doppler maps are divided into a plurality of groups depending on their absolute velocities. Hence, each group of velocity intervals will include both positive velocity intervals and negative velocity intervals. The groups are ordered such that velocity intervals in a group of higher order have larger absolute velocities than velocity intervals in a group of lower order. In other words, the positive axis is divided into n positive intervals $I_1^r, I_2^r, ..., I_n^r$ and the negative axis is divided into n negative intervals $I_1^l, I_2^l, ..., I_n^l$ that are the mirror images of the positive intervals around zero Doppler, wherein each positive interval includes a plurality of positive velocity intervals and each negative includes a corresponding plurality of negative velocity intervals. The group of velocity intervals of order $k$ is then the pair of the positive interval $I_k^r$ and the negative interval $I_k^l$. The plurality of groups are then processed in order by performing, for a current group, the acts of calculating a sequence of differences for the velocity intervals in the group, determining a frequency spectrum of the calculated sequence of differences, and on condition that there is a peak in the frequency spectrum for a frequency above the frequency threshold, proceeding to process the next group in the order. The sequence of differences for the velocity intervals in a group is calculated by, for each time interval of the sequence of time intervals, calculating from the range-Doppler map corresponding to the time interval a difference between a statistical measure of energy values for velocity intervals with positive velocities in the group of velocity intervals for the range interval and the statistical measure of energy values for velocity intervals with negative velocities in the group of velocity intervals for the range interval. This is continued until a condition that there is no peak in the frequency spectrum for a frequency above the frequency threshold is fulfilled for a current group of velocity intervals. The first velocity threshold is then set to a value corresponding to the maximum absolute velocity of the velocity intervals in the previous group in the order, e.g. equal to the maximum absolute velocity. This embodiment is based on using a subset of the steps of the method for determining that there are one or more swaying objects at a range interval for each of the groups of velocity intervals at the range interval. By performing the steps for groups in an increasing order, i.e. in an order of increasing absolute velocity, the last group in the order where there is a peak in the frequency spectrum for a frequency above the frequency threshold can be identified. In other words, the processing is performed for each group, i.e. pair of intervals ( $I_k^r, I_k^l$ ), in increasing order until a first group is found for which there is no peak in the frequency spectrum for a frequency above the frequency threshold. The last group for which there is a peak in the frequency spectrum for a frequency above the frequency threshold is thus the group of the order just below. As a peak in the frequency spectrum for a frequency above the frequency threshold indicates that there are one or more swaying objects, this is the group of velocity intervals with the highest absolute velocity for which it is determined that there are one or more swaying objects. The statistical measure used in this embodiment to determine the first velocity threshold may for example be one of standard deviation, variance, mean, median, and sum of squares. Furthermore, it may be the same as or differ from the statistical measure used in the calculating act S210 for each time interval of the sequence of time intervals in the method 100 as described in relation to Figure 1a hereinabove.

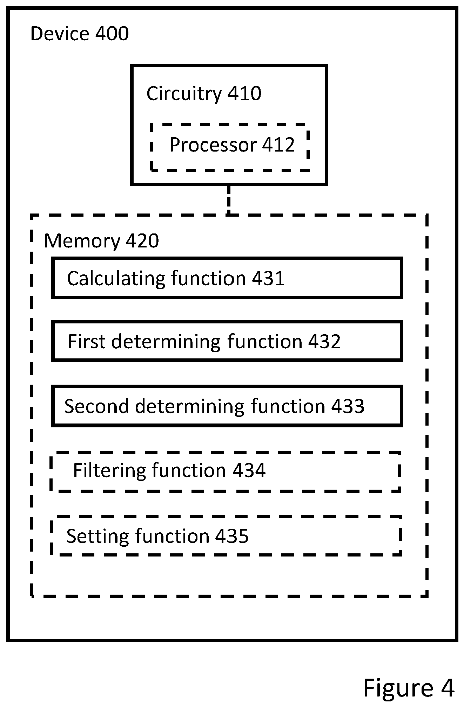

Figure 4 shows a block diagram in relation to embodiments of a device for determining that there are one or more swaying objects for a range interval of a plurality of range intervals based on a plurality of range-Doppler maps provided by a radar system. Each range-Doppler map of the plurality of range-Doppler maps corresponds to a time interval of a sequence of time intervals and comprises a respective energy value for a plurality of velocity intervals for each range interval of the plurality of range intervals. The device 400 may for example be included in radar system.

The device 400 comprises circuitry 410. The circuitry 410 is configured to carry out functions of the image processing system 400. The circuitry 410 may include a processor 412, such as for example a central processing unit (CPU), graphical processing unit (GPU), tensor processing unit (TPU), microcontroller, or microprocessor. The processor 412 is configured to execute program code. The program code may for example be configured to carry out the functions of the device 400.

The device 400 may further comprise a memory 420. The memory 420 may be one or more of a buffer, a flash memory, a hard drive, a removable media, a volatile memory, a non-volatile memory, a random access memory (RAM), or another suitable device. In a typical arrangement, the memory 420 may include a non-volatile memory for long term data storage and a volatile memory that functions as device memory for the circuitry 410. The memory 420 may exchange data with the circuitry 410 over a data bus. Accompanying control lines and an address bus between the memory 420 and the circuitry 410 also may be present.

Functions of the device 400 may be embodied in the form of executable logic routines (e.g., lines of code, software programs, etc.) that are stored on a non-transitory computer readable medium (e.g., the memory 420) of the device 400 and are executed by the circuitry 410 (e.g., using the processor 412). Furthermore, the functions of the device 400 may be a stand-alone software application or form a part of a software application that carries out additional tasks related to the device 400. The described functions may be considered a method that a processing unit, e.g., the processor 412 of the circuitry 410 is configured to carry out. Also, while the described functions may be implemented in software, such functionality may as well be carried out via dedicated hardware or firmware, or some combination of hardware, firmware and/or software.

The circuitry 410 is configured to execute a calculating function 431, a first determining function 432, and a second determining function 433. The circuitry 410 is further optionally configured to execute a filtering function 434 and a setting function 435.

The calculating function 431 is configured to, for each time interval of the sequence of time intervals, calculating from the range-Doppler map corresponding to the time interval a difference between a statistical measure of energy values of a set of velocity intervals with positive velocities of the plurality of velocity intervals for the range interval and the statistical measure of the energy values of a set of velocity intervals for negative velocities of the plurality of velocity intervals for the range interval.

The first determining function 432 is configured to determine a frequency spectrum of the calculated sequence of differences.

The second determining function 433 is configured to, on condition that there is a peak in the frequency spectrum for a frequency above a frequency threshold, determine that there are one or more swaying objects at the range interval.

The circuitry 410 may be further configured to execute a filtering function 434. The filtering function 434 is configured to, on condition that it is determined that there is a swaying object at the range interval, filtering out any detection in velocity intervals of the plurality of velocity intervals with absolute velocity less than a first velocity threshold for the range interval.

The filtering function 434 may be further configured to filter out energy values of velocity intervals of the plurality of velocity intervals with absolute velocity less than a first velocity threshold for the range interval on the further condition that there is no peak in the frequency spectrum for a frequency below the frequency threshold.

The first velocity threshold may be fixed.

The circuitry 410 may be further configured to execute a setting function 435 configured to, for each velocity interval at the range interval, aggregate energy values of at least a subset of the plurality of range-Doppler maps based on an aggregation function, thereby deriving an aggregated energy value for each velocity interval at the range interval, identify a maximum absolute velocity for which there among the plurality of velocity intervals for the range interval are a velocity interval with positive velocity and a velocity interval with negative velocity that have the maximum absolute velocity and an aggregated energy value over an aggregated energy threshold, and set the first velocity threshold based on the maximum absolute velocity.

The setting function 435 may alternatively be configured to divide the velocity intervals of the plurality of velocity intervals for the range interval of each range-Doppler map of the plurality of range-Doppler maps into a plurality of groups depending on their absolute velocities, wherein the groups are ordered such that velocity intervals in a group of higher order have larger absolute velocities than velocity intervals in a group of lower order, process the plurality of groups in order by, for a currently processed group: for each time interval of the sequence of time intervals, calculate from the range-Doppler map corresponding to the time interval a difference between the statistical measure of energy values for velocity intervals with positive velocities in the group of velocity intervals for the range interval and the statistical measure of energy values with negative velocities in the group of velocity intervals for the range interval, thereby calculating a sequence of differences for the sequence of time intervals, determine a frequency spectrum of the calculated sequence of differences for the sequence of time intervals, and on condition that there is a peak in the frequency spectrum for a frequency above the frequency threshold, proceeding to process the next group in the order, on a condition that there is a no peak in the frequency spectrum for a frequency above the frequency threshold, setting the first velocity threshold to a value corresponding to the maximum absolute velocity of the velocity intervals in the previous group in the order.

In the first determining function 432, the difference may be calculated between the statistical measure of energy values of a set of velocity intervals with positive velocities with absolute velocity less than a second velocity threshold for the range interval and the statistical measure of energy values of a set of velocity intervals with negative velocities with absolute velocity less than the second velocity threshold for the range interval.

The statistical measure may be one of standard deviation, variance, mean, median, and sum of squares.

The detailed descriptions of the acts of the method 100 described in relation to Figures 1a and 1b hereinabove apply also for the corresponding functions of the device 400. Furthermore, the optional additional features of the method 100 described in relation to Figures 1a and 1b hereinabove, when applicable, apply also to corresponding optional additional features of the device 400.

## Claims

1. A method (100) for determining that there are one or more swaying objects for a range interval of a plurality of range intervals based on a plurality of range-Doppler maps provided by a radar system, wherein each range-Doppler map of the plurality of range-Doppler maps corresponds to a time interval of a sequence of time intervals and comprises a respective energy value for a plurality of velocity intervals for each range interval of the plurality of range intervals, the method comprising:

   for each time interval of the sequence of time intervals, calculating (S120) from the range-Doppler map corresponding to the time interval a difference between a statistical measure of energy values for a set of velocity intervals with positive velocities of the plurality of velocity intervals for the range interval and the statistical measure of energy values for a set of velocity intervals with negative velocities of the plurality of velocity intervals for the range interval, thereby calculating a sequence of differences for the sequence of time intervals,
   determining (S130) a frequency spectrum of the calculated sequence of differences for the sequence of time intervals, and
   on condition (C140) that there is a peak in the frequency spectrum for a frequency above a frequency threshold, determining (S145) that there are one or more swaying objects at the range interval.

2. The method (100) according to claim 1, further comprising:
   on condition (C150) that it is determined that there are one or more swaying objects at the range interval, filtering (S158) out any detections in velocity intervals of the plurality of velocity intervals with absolute velocity less than a first velocity threshold for the range interval.

3. The method (100) according to claim 1, further comprising on condition (C150, C155) that it is determined that there are one or more swaying objects at the range interval and that there is no peak in the frequency spectrum for a frequency below the frequency threshold, filtering (S158) out any detections in velocity intervals of the plurality of velocity intervals with absolute velocity less than a first velocity threshold for the range interval.

4. The method (100) according to claim 2 or 3, wherein the first velocity threshold is fixed.

5. The method (100) according to claim 2 or 3, further comprising:

for each velocity interval at the range interval, aggregating energy values of at least a subset of the plurality of range-Doppler maps based on an aggregation function, thereby deriving an aggregated energy value for each velocity interval at the range interval;
identifying, among the plurality of velocity intervals for the range interval, a maximum absolute velocity for which there are a velocity interval with positive velocity and a velocity interval with negative velocity that have the maximum absolute velocity and an aggregated energy value over an aggregated energy threshold; and setting the first velocity threshold based on the maximum absolute velocity.

6. The method (100) according to claim 2 or 3, further comprising:

dividing the velocity intervals of the plurality of velocity intervals for the range interval of each range-Doppler map of the plurality of range-Doppler maps into a plurality of groups depending on their absolute velocities, wherein the groups are ordered such that velocity intervals in a group of higher order have larger absolute velocities than velocity intervals in a group of lower order,
processing the plurality of groups in order by, for a currently processed group:

for each time interval of the sequence of time intervals, calculating from the range-Doppler map corresponding to the time interval a difference between the statistical measure of energy values for velocity intervals with positive velocities in the group of velocity intervals for the range interval and the statistical measure of energy values for velocity intervals with negative velocities in the group of velocity intervals for the range interval, thereby calculating a sequence of differences for the sequence of time intervals;
determining a frequency spectrum of the calculated sequence of differences for the sequence of time intervals, and
on condition that there is a peak in the frequency spectrum for a frequency above the frequency threshold, proceeding to process the next group in the order,
on condition that there is a no peak in the frequency spectrum for a frequency above the frequency threshold, setting the first velocity threshold to a value corresponding to the maximum absolute velocity of the velocity intervals in the previous group in the order.

7. The method (100) according to any one of claims 1 to 6, wherein, in the act of calculating a difference, the difference is calculated between the statistical measure of energy values of a set of velocity intervals with positive velocities with absolute velocity less than a second velocity threshold for the range interval and the statistical measure of energy values of a set of velocity intervals with negative velocities with absolute velocity less than the second velocity threshold for the range interval.

8. The method (100) according to any one of the preceding claims, wherein the statistical measure is one of standard deviation, variance, mean, median, and sum of squares.

9. A non-transitory computer-readable storage medium having stored thereon instructions which, when executed in a device having a processing capability, causes the device to perform the method according to any one of claims 1 to 8.

10. A device (400) for determining that there are one or more swaying objects for a range interval of a plurality of range intervals based on a plurality of range-Doppler maps provided by a radar system, wherein each range-Doppler map of the plurality of range-Doppler maps corresponds to a time interval of a sequence of time intervals and comprises a respective energy value for a plurality of velocity intervals for each range interval of the plurality of range intervals, the device comprising circuitry (410) configured to execute:

a calculating function (431) configured to, for each time interval of the sequence of time intervals, calculating from the range-Doppler map corresponding to the time interval a difference between a statistical measure of energy values of a set of velocity intervals with positive velocities of the plurality of velocity intervals for the range interval and the statistical measure of the energy values of a set of velocity intervals for negative velocities of the plurality of velocity intervals for the range interval,
a first determining function (432) configured to determine a frequency spectrum of the calculated sequence of differences, and
a second determining function (433) configured to, on condition that there is a peak in the frequency spectrum for a frequency above a frequency threshold, determine that there are one or more swaying objects at the range interval.

11. The device (400) according to claim 10, wherein the circuitry is further configured to execute:
a filtering function (434) configured to, on condition that it is determined that there is a swaying object at the range interval, filtering out any detection in velocity intervals of the plurality of velocity intervals with absolute velocity less than a first velocity threshold for the range interval.

12. The device (400) according to claim 10, wherein the circuitry is further configured to execute:
a filtering function (434) configured to, on condition that it is determined that there is a swaying object at the range interval and that there is no peak in the frequency spectrum for a frequency below the frequency threshold, filtering out any detection in velocity intervals of the plurality of velocity intervals with absolute velocity less than a first velocity threshold for the range interval.

13. The device (400) according to claim 11 or 12, wherein the first velocity threshold is fixed.

14. The device (400) according to claim 11 or 12, wherein the circuitry is further configured to execute:
a setting function (435) configured to, for each velocity interval at the range interval, aggregate energy values of at least a subset of the plurality of range-Doppler maps based on an aggregation function, thereby deriving an aggregated energy value for each velocity interval at the range interval, identify, among the plurality of velocity intervals for the range interval, a maximum absolute velocity for which there are a velocity interval with positive velocity and a velocity interval with negative velocity that have the maximum absolute velocity and an aggregated energy value over an aggregated energy threshold, and set the first velocity threshold based on the maximum absolute velocity.

15. The device (400) according to claim 11 or 12, wherein the circuitry is further configured to execute:
a setting function (435) configured to divide the velocity intervals of the plurality of velocity intervals for the range interval of each range-Doppler map of the plurality of range-Doppler maps into a plurality of groups depending on their absolute velocities, wherein the groups are ordered such that velocity intervals in a group of higher order have larger absolute velocities than velocity intervals in a group of lower order, process the plurality of groups in order by, for a currently processed group: for each time interval of the sequence of time intervals, calculate from the range-Doppler map corresponding to the time interval a difference between the statistical measure of energy values for velocity intervals with positive velocities in the group of velocity intervals for the range interval and the statistical measure of energy values with negative velocities in the group of velocity intervals for the range interval, thereby calculating a sequence of differences for the sequence of time intervals, determine a frequency spectrum of the calculated sequence of differences for the sequence of time intervals, and on condition that there is a peak in the frequency spectrum for a frequency above the frequency threshold, proceeding to process the next group in the order, on a condition that there is no peak in the frequency spectrum for a frequency above the frequency threshold, setting the first velocity threshold to a value corresponding to the maximum absolute velocity of the velocity intervals in the previous group in the order.

## Patentansprüche

1. Verfahren (100) zum Bestimmen, dass es ein oder mehrere schwankende Objekte für ein Entfernungsintervall einer Vielzahl von Entfernungsintervallen gibt, auf der Grundlage von einer Vielzahl von Entfernungs-Doppler-Karten, die durch ein Radarsystem geliefert werden, wobei jede Entfernungs-Doppler-Karte aus der Vielzahl von Entfernungs-Doppler-Karten mit einem Zeitintervall aus einer Sequenz von Zeitintervallen korrespondiert und einen jeweiligen Energiewert für eine Vielzahl von Geschwindigkeitsintervallen für jedes Entfernungsintervall aus der Vielzahl von Entfernungsintervallen umfasst, wobei das Verfahren Folgendes umfasst:

für jedes Zeitintervall der Sequenz von Zeitintervallen, Berechnen (S120) aus der Entfernungs-Doppler-Karte, diesem Zeitintervall korrespondierend, einer Differenz zwischen einem statistischen Maß von Energiewerten für eine Menge von Geschwindigkeitsintervallen mit positiven Geschwindigkeiten der Vielzahl von Geschwindigkeitsintervallen für dieses Entfernungsintervall und dem statistischen Maß von Energiewerten für eine Menge von Geschwindigkeitsintervallen mit negativen Geschwindigkeiten der Vielzahl von Geschwindigkeitsintervallen für dieses Entfernungsintervall, wodurch eine Sequenz von Differenzen für die Sequenz von Zeitintervallen berechnet wird,
Bestimmen (S130) eines Frequenzspektrums der berechneten Sequenz von Differenzen für die Sequenz von Zeitintervallen und
unter der Bedingung (C140), dass es für eine Frequenz über einem Frequenzschwellenwert eine Spitze in dem Frequenzspektrum gibt, Bestimmen (S145), dass es in diesem Entfernungsintervall ein oder mehrere schwankende Objekte gibt.

2. Verfahren (100) nach Anspruch 1, ferner umfassend:
unter der Bedingung (C150), dass bestimmt wird, dass es in diesem Entfernungsintervall ein oder mehrere schwankende Objekte gibt, Ausfiltern (S158) jeglicher Detektionen in Geschwindigkeitsintervallen der Vielzahl von Geschwindigkeitsintervallen mit einer kleineren absoluten Geschwindigkeit als ein erster Geschwindigkeitsschwellenwert für dieses Entfernungsintervall.

3. Verfahren (100) nach Anspruch 1, ferner umfassend, unter der Bedingung (C150, C155), dass bestimmt wird, dass es in diesem Entfernungsintervall ein oder mehrere schwankende Objekte gibt und dass es für eine Frequenz unter dem Frequenzschwellenwert keine Spitze in dem Frequenzspektrum gibt, Ausfiltern (S158) jeglicher Detektionen in Geschwindigkeitsintervallen der Vielzahl von Geschwindigkeitsintervallen mit einer kleineren absoluten Geschwindigkeit als ein erster Geschwindigkeitsschwellenwert für dieses Entfernungsintervall.

4. Verfahren (100) nach Anspruch 2 oder 3, wobei der erste Geschwindigkeitsschwellenwert festgelegt ist.

5. Verfahren (100) nach Anspruch 2 oder 3, ferner umfassend:

für jedes Geschwindigkeitsintervall in diesem Entfernungsintervall, Aggregieren von Energiewerten von zumindest einer Untermenge der Vielzahl von Entfernungs-Doppler-Karten auf der Grundlage einer Aggregationsfunktion, wodurch ein Aggregierte-Energie-Wert für jedes Geschwindigkeitsintervall in diesem Entfernungsintervall abgeleitet wird;
Identifizieren, unter der Vielzahl von Geschwindigkeitsintervallen für das Entfernungsintervall, einer maximalen absoluten Geschwindigkeit, für welche es ein Geschwindigkeitsintervall mit positiver Geschwindigkeit gibt, und eines Geschwindigkeitsintervalls mit negativer Geschwindigkeit, welches die maximale absolute Geschwindigkeit und einen Aggregierte-Energie-Wert über einem Aggregierte-Energie-Schwellenwert aufweist, und
Einstellen des ersten Geschwindigkeitsschwellenwerts auf der Grundlage der maximalen absoluten Geschwindigkeit.

6. Verfahren (100) nach Anspruch 2 oder 3, ferner umfassend: Aufteilen der Geschwindigkeitsintervalle der Vielzahl von Geschwindigkeitsintervallen für dieses Entfernungsintervall von jeder Entfernungs-Doppler-Karte der Vielzahl von Entfernungs-Doppler-Karten in eine Vielzahl von Gruppen in Abhängigkeit von deren absoluten Geschwindigkeiten, wobei die Gruppen derart geordnet sind, dass Geschwindigkeitsintervalle in einer Gruppe von höherer Ordnung größere absolute Geschwindigkeiten aufweisen als Geschwindigkeitsintervalle in einer Gruppe von niedrigerer Ordnung,
Verarbeiten der Vielzahl von Gruppen in Ordnung durch, für eine aktuell verarbeitete Gruppe:

für jedes Zeitintervall der Sequenz von Zeitintervallen,
Berechnen aus der Entfernungs-Doppler-Karte, diesem Zeitintervall korrespondierend, einer Differenz zwischen dem statistischen Maß von Energiewerten für Geschwindigkeitsintervalle mit positiven Geschwindigkeiten in der Gruppe von Geschwindigkeitsintervallen für dieses Entfernungsintervall und dem statistischen Maß von Energiewerten für Geschwindigkeitsintervalle mit negativen Geschwindigkeiten in der Gruppe von Geschwindigkeitsintervallen für dieses Entfernungsintervall, wodurch eine Sequenz von Differenzen für die Sequenz von Zeitintervallen berechnet wird;
Bestimmen eines Frequenzspektrums der berechneten Sequenz von Differenzen für die Sequenz von Zeitintervallen und,
unter der Bedingung, dass es für eine Frequenz über dem Frequenzschwellenwert eine Spitze in dem Frequenzspektrum gibt, Weitergehen zum Verarbeiten der nächsten Gruppe in der Ordnung,
unter der Bedingung, dass es für eine Frequenz über dem Frequenzschwellenwert keine Spitze in dem Frequenzspektrum gibt, Einstellen des ersten Geschwindigkeitsschwellenwerts auf einen Wert, der mit der maximalen absoluten Geschwindigkeit der Geschwindigkeitsintervalle in der vorhergehenden Gruppe in der Ordnung korrespondiert.

7. Verfahren (100) nach einem der Ansprüche 1 bis 6, wobei, in der Handlung von Berechnen einer Differenz, die Differenz berechnet wird zwischen dem statistischen Maß von Energiewerten einer Menge von Geschwindigkeitsintervallen mit positiven Geschwindigkeiten mit absoluter Geschwindigkeit kleiner als ein zweiter Geschwindigkeitsschwellenwert für dieses Entfernungsintervall und dem statistischen Maß von Energiewerten einer Menge von Geschwindigkeitsintervallen mit negativen Geschwindigkeiten mit absoluter Geschwindigkeit kleiner als der zweite Geschwindigkeitsschwellenwert für dieses Entfernungsintervall.

8. Verfahren (100) nach einem der vorhergehenden Ansprüche, wobei das statistische Maß eines ist von einer Standardabweichung, einer Varianz, einem Mittelwert, einem Medianwert und einer Summe von Quadraten.

9. Nicht-transitorisches computerlesbares Speicherungsmedium, das darauf Anweisungen gespeichert hat, die bei Ausführung in einer Vorrichtung mit Verarbeitungsfähigkeit die Vorrichtung veranlassen zum Durchführen des Verfahrens nach einem der Ansprüche 1 bis 8.

10. Vorrichtung (400) zum Bestimmen, dass es ein oder mehrere schwankende Objekte für ein Entfernungsintervall einer Vielzahl von Entfernungsintervallen gibt, auf der Grundlage von einer Vielzahl von Entfernungs-Doppler-Karten, die durch ein Radarsystem geliefert werden, wobei jede Entfernungs-Doppler-Karte aus der Vielzahl von Entfernungs-Doppler-Karten mit einem Zeitintervall aus einer Sequenz von Zeitintervallen korrespondiert und einen jeweiligen Energiewert für eine Vielzahl von Geschwindigkeitsintervallen für jedes Entfernungsintervall aus der Vielzahl von Entfernungsintervallen umfasst, wobei die Vorrichtung eine Schaltungsanordnung (410) umfasst, die ausgelegt ist zum Ausführen:

    einer Berechnungsfunktion (431), ausgelegt zum, für jedes Zeitintervall der Sequenz von Zeitintervallen, Berechnen aus der Entfernungs-Doppler-Karte, diesem Zeitintervall korrespondierend, einer Differenz zwischen einem statistischen Maß von Energiewerten von einer Menge von Geschwindigkeitsintervallen mit positiven Geschwindigkeiten der Vielzahl von Geschwindigkeitsintervallen für dieses Entfernungsintervall und dem statistischen Maß der Energiewerte von einer Menge von Geschwindigkeitsintervallen für negative Geschwindigkeiten der Vielzahl von Geschwindigkeitsintervallen für dieses Entfernungsintervall,

    einer ersten Bestimmungsfunktion (432), ausgelegt zum Bestimmen eines Frequenzspektrums der berechneten Sequenz von Differenzen, und

    einer zweiten Bestimmungsfunktion (433), ausgelegt zum, unter der Bedingung, dass es für eine Frequenz über einem Frequenzschwellenwert eine Spitze in dem Frequenzspektrum gibt, Bestimmen, dass es in diesem Entfernungsintervall ein oder mehrere schwankende Objekte gibt.

11. Vorrichtung (400) nach Anspruch 10, wobei die Schaltungsanordnung ferner ausgelegt ist zum Ausführen:
einer Filterungsfunktion (434), ausgelegt zum, unter der Bedingung, dass bestimmt wird, dass es in diesem Entfernungsintervall ein schwankendes Objekt gibt, Ausfiltern jeglicher Detektion in Geschwindigkeitsintervallen der Vielzahl von Geschwindigkeitsintervallen mit einer kleineren absoluten Geschwindigkeit als ein erster Geschwindigkeitsschwellenwert für dieses Entfernungsintervall.

12. Vorrichtung (400) nach Anspruch 10, wobei die Schaltungsanordnung ferner ausgelegt ist zum Ausführen:

    einer Filterungsfunktion (434), ausgelegt zum, unter der Bedingung, dass bestimmt wird, dass es in diesem Entfernungsintervall ein schwankendes Objekt gibt und dass es für eine Frequenz unter dem Frequenzschwellenwert keine Spitze in dem Frequenzspektrum gibt, Ausfiltern jeglicher Detektion in Geschwindigkeitsintervallen der Vielzahl von Geschwindigkeitsintervallen mit einer kleineren absoluten Geschwindigkeit als ein erster Geschwindigkeitsschwellenwert für dieses Entfernungsintervall.

13. Vorrichtung (400) nach Anspruch 11 oder 12, wobei der erste Geschwindigkeitsschwellenwert festgelegt ist.

14. Vorrichtung (400) nach Anspruch 11 oder 12, wobei die Schaltungsanordnung ferner ausgelegt ist zum Ausführen:

    einer Einstellenfunktion (435), ausgelegt zum, für jedes Geschwindigkeitsintervall in diesem Entfernungsintervall, Aggregieren von Energiewerten von zumindest einer Untermenge der Vielzahl von Entfernungs-Doppler-Karten auf der Grundlage einer Aggregationsfunktion, wodurch ein Aggregierte-Energie-Wert für jedes Geschwindigkeitsintervall in diesem Entfernungsintervall abgeleitet wird, Identifizieren, unter der Vielzahl von Geschwindigkeitsintervallen für dieses Entfernungsintervall, einer maximalen absoluten Geschwindigkeit, für welche es ein Geschwindigkeitsintervall mit positiver Geschwindigkeit gibt, und eines Geschwindigkeitsintervalls mit negativer Geschwindigkeit, welche die maximale absolute Geschwindigkeit und einen Aggregierte-Energie-Wert über einem Aggregierte-Energie-Schwellenwert aufweisen, und Einstellen des ersten Geschwindigkeitsschwellenwerts auf der Grundlage der maximalen absoluten Geschwindigkeit.

15. Vorrichtung (400) nach Anspruch 11 oder 12, wobei die Schaltungsanordnung ferner ausgelegt ist zum Ausführen:

einer Einstellenfunktion (435), ausgelegt zum Aufteilen der Geschwindigkeitsintervalle der Vielzahl von Geschwindigkeitsintervallen für dieses Entfernungsintervall von jeder Entfernungs-Doppler-Karte der Vielzahl von Entfernungs-Doppler-Karten in eine Vielzahl von Gruppen in Abhängigkeit von deren absoluten Geschwindigkeiten, wobei die Gruppen derart geordnet sind, dass Geschwindigkeitsintervalle in einer Gruppe von höherer Ordnung größere absolute Geschwindigkeiten aufweisen als Geschwindigkeitsintervalle in einer Gruppe von niedrigerer Ordnung, Verarbeiten der Vielzahl von Gruppen gemäß Ordnung durch, für eine aktuell verarbeitete Gruppe: für jedes Zeitintervall der Sequenz von Zeitintervallen, Berechnen aus der Entfernungs-Doppler-Karte, diesem Zeitintervall korrespondierend, einer Differenz zwischen dem statistischen Maß von Energiewerten für Geschwindigkeitsintervalle mit positiven Geschwindigkeiten in der Gruppe von Geschwindigkeitsintervallen für dieses Entfernungsintervall und dem statistischen Maß von Energiewerten mit negativen Geschwindigkeiten in der Gruppe von Geschwindigkeitsintervallen für dieses Entfernungsintervall, wodurch eine Sequenz von Differenzen für die Sequenz von Zeitintervallen berechnet wird, Bestimmen eines Frequenzspektrums der berechneten Sequenz von Differenzen für die Sequenz von Zeitintervallen und, unter der Bedingung, dass es für eine Frequenz über dem Frequenzschwellenwert eine Spitze in dem Frequenzspektrum gibt, Weitergehen zum Verarbeiten der nächsten Gruppe in der Ordnung, unter einer Bedingung, dass es für eine Frequenz über dem Frequenzschwellenwert keine Spitze in dem Frequenzspektrum gibt, Einstellen des ersten Geschwindigkeitsschwellenwerts auf einen Wert, der mit der maximalen absoluten Geschwindigkeit der Geschwindigkeitsintervalle in der vorhergehenden Gruppe in der Ordnung korrespondiert.

## Revendications

1. Procédé (100) de détermination de la présence d'un ou de plusieurs objets oscillants pour un intervalle de distance d'une pluralité d'intervalles de distance sur la base d'une pluralité de cartes Doppler-distance fournies par un système radar, chaque carte Doppler-distance de la pluralité de cartes Doppler-distance correspondant à un intervalle de temps d'une suite d'intervalles de temps et comprenant une valeur d'énergie respective pour une pluralité d'intervalles de vitesse pour chaque intervalle de distance de la pluralité d'intervalles de distance, le procédé comprenant :

   pour chaque intervalle de temps de la suite d'intervalles de temps, le calcul (S120), à partir de la carte Doppler-distance correspondant à l'intervalle de temps, d'une différence entre une mesure statistique de valeurs d'énergie pour un ensemble d'intervalles de vitesse présentant des vitesses positives de la pluralité d'intervalles de vitesse pour l'intervalle de distance et la mesure statistique de valeurs d'énergie pour un ensemble d'intervalles de vitesse présentant des vitesses négatives de la pluralité d'intervalles de vitesse pour l'intervalle de distance, calculant ainsi une suite de différences pour la suite d'intervalles de temps,
   La détermination (S130) d'un spectre de fréquence de la suite de différences calculée pour la suite d'intervalles de temps, et
   à la condition (C140) qu'il existe un pic dans le spectre de fréquence pour une fréquence supérieure à un seuil de fréquence, le fait de déterminer (S145) qu'il existe un ou plusieurs objets oscillants au niveau de l'intervalle de distance.

2. Procédé (100) selon la revendication 1, comprenant en outre :
   à la condition (C150) qu'il soit déterminé qu'il existe un ou plusieurs objets oscillants au niveau de l'intervalle de distance, l'élimination par filtrage (S158) de toute détection dans les intervalles de vitesse de la pluralité d'intervalles de vitesse présentant une vitesse absolue inférieure à un premier seuil de vitesse pour l'intervalle de distance.

3. Procédé (100) selon la revendication 1, comprenant en outre, à la condition (C150, C155) qu'il soit déterminé qu'il existe un ou plusieurs objets oscillants au niveau de l'intervalle de distance et qu'il n'existe aucun pic dans le spectre de fréquence pour une fréquence inférieure au seuil de fréquence, l'élimination par filtrage (S158) de toute détection dans les intervalles de vitesse de la pluralité d'intervalles de vitesse présentant une vitesse absolue inférieure à un premier seuil de vitesse pour l'intervalle de distance.

4. Procédé (100) selon la revendication 2 ou 3, le premier seuil de vitesse étant fixe.

5. Procédé (100) selon la revendication 2 ou 3, comprenant en outre :

   Pour chaque intervalle de vitesse au niveau de l'intervalle de distance, l'agrégation de valeurs d'énergie d'au moins un sous-ensemble de la pluralité de cartes Doppler-distance sur la base d'une fonction d'agrégation, obtenant ainsi une valeur d'énergie agrégée pour chaque intervalle de vitesse au niveau de l'intervalle de distance ; l'identification, parmi la pluralité d'intervalles de vitesses pour l'intervalle de distance, d'une vitesse absolue maximale pour laquelle il existe un intervalle de vitesses à vitesse positive et un intervalle de vitesses à vitesse négative ayant la vitesse absolue maximale et une valeur d'énergie agrégée supérieure à un seuil d'énergie agrégée ; et
réglage du premier seuil de vitesse en fonction de la vitesse absolue maximale.

6. Procédé (100) selon la revendication 2 ou 3, comprenant en outre :

la division des intervalles de vitesse de la pluralité d'intervalles de vitesse pour l'intervalle de distance de chaque carte Doppler-distance de la pluralité de cartes Doppler-distance en une pluralité de groupes en fonction de leurs vitesses absolues, les groupes étant ordonnés de telle sorte que les intervalles de vitesse d'un groupe d'ordre supérieur aient des vitesses absolues supérieures à celles des intervalles de vitesse d'un groupe d'ordre inférieur,
traitement de la pluralité de groupes dans l'ordre par, pour un groupe en cours :

pour chaque intervalle de temps de la suite d'intervalles de temps, le calcul, à partir de la carte Doppler-distance correspondant à l'intervalle de temps, d'une différence entre la mesure statistique des valeurs d'énergie pour les intervalles de vitesse présentant des vitesses positives dans le groupe d'intervalles de vitesse pour l'intervalle de temps et la mesure statistique des valeurs d'énergie pour les intervalles de vitesse présentant des vitesses négatives dans le groupe d'intervalles de vitesse pour l'intervalle de distance, calculant ainsi une suite de différences pour la suite d'intervalles de temps ;
la détermination d'un spectre de fréquence de la suite de différences calculée pour la suite d'intervalles de temps, et

à la condition qu'il existe un pic dans le spectre de fréquence pour une fréquence supérieure au seuil de fréquence, le fait de passer au traitement du groupe suivant dans l'ordre,
à la condition qu'il n'existe aucun pic dans le spectre de fréquence pour une fréquence supérieure au seuil de fréquence, le réglage du premier seuil de vitesse à une valeur correspondant à la vitesse absolue maximale des intervalles de vitesse du groupe précédent dans l'ordre.

7. Procédé (100) selon l'une quelconque des revendications 1 à 6, dans lequel, lors du calcul d'une différence, la différence est calculée entre la mesure statistique de valeurs d'énergie d'un ensemble d'intervalles de vitesse présentant des vitesses positives avec une vitesse absolue inférieure à un second seuil de vitesse pour l'intervalle de distance et la mesure statistique de valeurs d'énergie d'un ensemble d'intervalles de vitesse présentant des vitesses négatives avec une vitesse absolue inférieure au second seuil de vitesse pour l'intervalle de distance.

8. Procédé (100) selon l'une quelconque des revendications précédentes, la mesure statistique étant une mesure parmi un écart-type, une variance, une moyenne, une médiane et une somme de carrés.

9. Support de stockage non transitoire lisible par ordinateur sur lequel sont stockées des instructions qui, lorsqu'elles sont exécutées dans un dispositif doté d'une capacité de traitement, amènent le dispositif à réaliser le procédé selon l'une quelconque des revendications 1 à 8.

10. Dispositif (400) de détermination de la présence d'un ou de plusieurs objets oscillants pour un intervalle de distance d'une pluralité d'intervalles de distance sur la base d'une pluralité de cartes Doppler-distance fournies par un système radar, chaque carte Doppler-distance de la pluralité de cartes Doppler-distance correspondant à un intervalle de temps d'une suite d'intervalles de temps et comprenant une valeur d'énergie respective pour une pluralité d'intervalles de vitesse pour chaque intervalle de distance de la pluralité d'intervalles de distance, le dispositif comprenant une circuiterie (410) configurée pour exécuter :

une fonction (431) de calcul configurée pour, pour chaque intervalle de temps de la suite d'intervalles de temps, calculer à partir de la carte Doppler-distance correspondant à l'intervalle de temps une différence entre une mesure statistique de valeurs d'énergie d'un ensemble d'intervalles de vitesse présentant des vitesses positives de la pluralité d'intervalles de vitesse pour l'intervalle de distance et la mesure statistique des valeurs d'énergie d'un ensemble d'intervalles de vitesse pour des vitesses négatives de la pluralité d'intervalles de vitesse pour l'intervalle de distance,
une première fonction (432) de détermination configurée pour déterminer un spectre de fréquence de la suite de différences calculée, et
une seconde fonction (433) de détermination configurée pour, à la condition qu'il existe un pic dans le spectre de fréquences pour une fréquence supérieure à un seuil de fréquence, déterminer qu'il existe un ou plusieurs objets oscillants au niveau de l'intervalle de distance.

11. Dispositif (400) selon la revendication 10, la circuiterie étant en outre configurée pour exécuter : une fonction (434) de filtrage configurée pour, à la condition qu'il soit déterminé qu'il existe un objet oscillant au niveau de l'intervalle de distance, éliminer par filtrage toute détection dans des intervalles de vitesse de la pluralité d'intervalles de vitesse présentant une vitesse absolue inférieure à un premier seuil de vitesse pour l'intervalle de distance.

12. Dispositif (400) selon la revendication 10, la circuiterie étant en outre configurée pour exécuter : une fonction (434) de filtrage configurée pour, à condition qu'il soit déterminé qu'il existe un objet oscillant au niveau de l'intervalle de distance et qu'il n'existe aucun pic dans le spectre de fréquence pour une fréquence inférieure au seuil de fréquence, éliminer par filtrage toute détection dans des intervalles de vitesse de la pluralité d'intervalles de vitesse présentant une vitesse absolue inférieure à un premier seuil de vitesse pour l'intervalle de distance.

13. Dispositif (400) selon la revendication 11 ou 12, le premier seuil de vitesse étant fixe.

14. Dispositif (400) selon la revendication 11 ou 12, la circuiterie étant en outre configurée pour exécuter : une fonction (435) de réglage configurée pour, pour chaque intervalle de vitesse au niveau de l'intervalle de distance, agréger des valeurs d'énergie d'au moins un sous-ensemble de la pluralité de cartes Doppler-distance sur la base d'une fonction d'agrégation, obtenant ainsi une valeur d'énergie agrégée pour chaque intervalle de vitesse au niveau de l'intervalle de distance, identifier, parmi la pluralité d'intervalles de vitesse pour l'intervalle de distance, une vitesse absolue maximale pour laquelle il existe un intervalle de vitesse à vitesse positive et un intervalle de vitesse à vitesse négative ayant la vitesse absolue maximale et une valeur d'énergie agrégée sur un seuil d'énergie agrégée, et régler le premier seuil de vitesse en fonction de la vitesse absolue maximale.

15. Dispositif (400) selon la revendication 11 ou 12, la circuiterie étant en outre configurée pour exécuter : une fonction (435) de réglage configurée pour diviser les intervalles de vitesse de la pluralité d'intervalles de vitesse pour l'intervalle de distance de chaque carte Doppler-distance de la pluralité de cartes Doppler-distance en une pluralité de groupes en fonction de leurs vitesses absolues, les groupes étant ordonnés de telle sorte que les intervalles de vitesse d'un groupe d'ordre supérieur aient des vitesses absolues supérieures à celles des intervalles de vitesse d'un groupe d'ordre inférieur, traiter la pluralité de groupes dans l'ordre par, pour un groupe actuellement traité : pour chaque intervalle de temps de la suite d'intervalles de temps, calcul, à partir de la carte Doppler-distance correspondant à l'intervalle de temps, d'une différence entre la mesure statistique de valeurs d'énergie pour les intervalles de vitesse à vitesses positives dans le groupe d'intervalles de vitesse pour l'intervalle de distance et la mesure statistique de valeurs d'énergie à vitesses négatives dans le groupe d'intervalles de vitesse pour l'intervalle de distance, calculant ainsi une suite de différences pour la suite d'intervalles de temps, déterminer un spectre de fréquence de la suite de différences calculée pour la suite d'intervalles de temps, et à la condition qu'il existe un pic dans le spectre de fréquence pour une fréquence supérieure au seuil de fréquence, passer au traitement du groupe suivant dans l'ordre, à la condition qu'il n'existe aucun pic dans le spectre de fréquence pour une fréquence supérieure au seuil de fréquence, régler le premier seuil de vitesse à une valeur correspondant à la vitesse absolue maximale des intervalles de vitesse dans le groupe précédent dans l'ordre.

100

Start

S110 — $i = 1$

S120 — For a range interval of a range-Doppler map corresponding to the time interval $i$: calculate a difference between a statistical measure of energy values for a set of positive velocity intervals and the statistical measure of energy values for a set of negative velocity intervals

S125 — $i = i + 1$

C128 — $i > N$ — No

Yes

S130 — Determine a frequency spectrum of the calculated sequence of differences for the sequence of time intervals

C140 — Peak for frequency > threshold

Yes — No

S145 — Determine that there are one or more swaying objects at the rage interval

S148 — Determine that there are no swaying objects at the rage interval

To C150

Figure 1a

From S145

C150 — Swaying object at the range interval

Yes

No

Stop

C155 — No peak for frequency ≤ threshold

No

Stop

Yes

S158 — Filter out detections in velocity intervals with absolute velocity < threshold

Stop

Figure 1b

Figure 2

Figure 3a

Figure 3b

Device 400

Circuitry 410

Processor 412

Memory 420

Calculating function 431

First determining function 432

Second determining function 433

Filtering function 434

Setting function 435

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115113208 A
- US 39767283 A

- US 2022026557 A1

**Non-patent literature cited in the description**

- mmHawkeye: Passive UAV Detection with a COTS mmWave Radar. **ZHANG JIA et al.** 2023 20TH ANNUAL IEEE INTERNATIONAL CONFERENCE ON SENSING, COMMUNICATION, AND NETWORKING (SECON). IEEE, 11 September 2023, 267-275